# EUROPEAN PATENT APPLICATION

(11) **EP 0 741 309 A2**
(43) Date of publication of application: **06.11.1996**
(21) Application number: 96670002.3
(22) Date of filing: 03.05.1996
(51) Int. Cl.: G02B 17/08

(54) **Corrected objective lens composed of mirrors**

(30) Priority: 04.05.1995 PT 10169695
(71) Applicant: Abrantes Candeias, Joaquim Antonio, P-2855 Corroios (PT)
(72) Inventor: Abrantes Candeias, Joaquim Antonio, P-2855 Corroios (PT)
(74) Representative: Pereira da Cruz, Joao

(57) **Abstract**

Objective lens for the general projection of objects or images, such as a television image or the page of a book, consisting of mirrors, with corrected astigmatism, this being achieved in two different ways: by differentiating the curvature radius of the two median lines of each mirror's surface, or by placing refracting pieces (2) at the inlet and (or) outlet of the light on or from the objective lens. These pieces may be used to correct other aberrations in accordance with the aims for which the objective lens is used. The two mirrors (1) are placed at an angle of approximately 45°, and the projected light intersects the incident light at an angle of approximately 90°, thereby enabling the distortion of one mirror to have the opposite sign of the distortion of the other mirror.

## Description

The present invention relates to an objective lens for projecting images, essentially composed of two mirrors. It has two curved mirrors (1) placed at an angle of approximately 45°, so that the reflexion of the light captured by the first mirror falls upon the second one, intersecting again with the incident light and leaving the objective lens at an angle of approximately 90° with regard to the axis of said incident light.

An objective lens of this kind would have a strong astigmatism which would spoil the quality of the image. This can be corrected by providing surfaces with different radius of curvature, according to the median lines of the mirror's surfaces. As an alternative to this form of correction refractor pieces (2) may be placed at the inlet or outlet of the light on or from the objective. These pieces may be able to correct the lens' astigmatism because they have one or more surfaces with different radius of curvature, according to the two orthogonal axis of the surface. As the refractor pieces do not contribute with a strong concentration of light, this being the function of the mirrors, they will not introduce an appreciable chromatic aberration. They may, however, consist of two elements with different refractive indexes, whenever the function they are meant to perform justifies the price increase this implies.

The shape of these refractor pieces will be adapted to the use thereof and may be plano-convex or concave-convex, in order to compensate for the curvature of the field of an image projected by a cinescope.

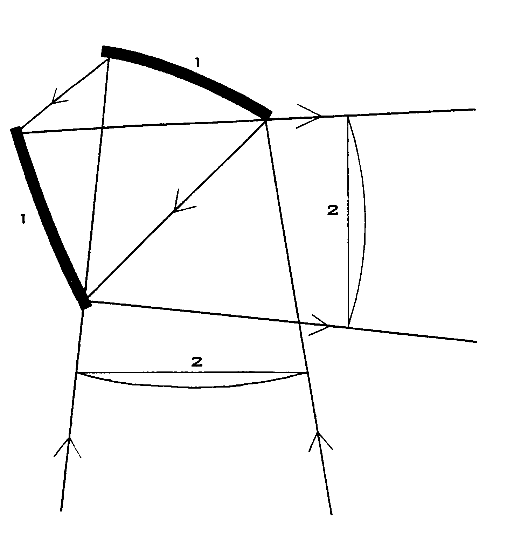

## Claims

1. Objective lens with mirrors, characterized in that the two curved mirrors are placed in such a way that the reflected light intersects the incident light, and wherein the strong astigmatism which would result therefrom is corrected by the fact that either mirror has a different radius of curvature in the median line of its surface.

2. Objective lens with mirrors, according to claim 1, wherein the astigmatism is corrected by means of one or two pieces or sets of refractor pieces at the inlet and (or) outlet of the light on or from the objective lens.

3. Objective lens with mirrors, according to claim 1, characterized in that it has one or two pieces or sets of refractor pieces at the inlet and (or) outlet of the light on or from the objective lens, in order to correct other aberrations, wich are considered relevant according to the aim of said objective lens.

4. Objective lens with mirrors, according to claim 1, characterized in that the refractor pieces simultaneously correct the astigmatism and other optional aberrations, according to the aim for wich said objective lens is meant.
